(19) Europäisches Patentamt
European Patent Office
Office européen des brevets

(11) **EP 1 463 850 B1**

(12) **EUROPÄISCHE PATENTSCHRIFT**

(45) Veröffentlichungstag und Bekanntmachung des Hinweises auf die Patenterteilung:
**02.01.2008 Patentblatt 2008/01**

(21) Anmeldenummer: **02790355.8**

(22) Anmeldetag: **11.11.2002**

(51) Int Cl.:
*D01D 5/088* (2006.01)          *D01D 5/06* (2006.01)
*D01F 2/00* (2006.01)

(86) Internationale Anmeldenummer:
**PCT/EP2002/012592**

(87) Internationale Veröffentlichungsnummer:
**WO 2003/057952 (17.07.2003 Gazette 2003/29)**

(54) **SPINNVERFAHREN MIT TURBULENTER KÜHLBEBLASUNG**

SPINNING METHOD HAVING TURBULENT COOLING BY BLOWING

PROCEDE DE FILAGE AVEC SOUFFLERIE DE REFROIDISSEMENT

(84) Benannte Vertragsstaaten:
**AT BE BG CH CY CZ DE DK EE ES FI FR GB GR IE IT LI LU MC NL PT SE SK TR**

(30) Priorität: **08.01.2002 DE 10200406**

(43) Veröffentlichungstag der Anmeldung:
**06.10.2004 Patentblatt 2004/41**

(73) Patentinhaber: **Zimmer Aktiengesellschaft 60388 Frankfurt am Main (DE)**

(72) Erfinder:
• **ZIKELI, Stefan A-4844 Regau (AT)**

• **ECKER, Friedrich A-4850 Timelkam (AT)**

(74) Vertreter: **Grünecker, Kinkeldey, Stockmair & Schwanhäusser Anwaltssozietät Maximilianstrasse 58 80538 München (DE)**

(56) Entgegenhaltungen:
WO-A-00/06813          WO-A-94/28218
WO-A-96/17118

**Beschreibung**

Die Erfindung betrifft ein Verfahren gemäß dem Oberbegriff von Anspruch 1.

Die Grundlagen der Herstellung von Endlosformkörpern, wie Lyocell-Fasem, aus einer Spinnlösung enthaltend Cellulose, Wasser und tertiäres Aminoxid, vorzugsweise N-Methyl-Morpholin-N-Oxid (NMMNO), sind in der US 4,246,221 beschrieben. Demnach findet die Herstellung von Endlosformkörpem im Wesentlichen in drei Schritten statt: Zunächst wird die Spinnlösung durch eine Vielzahl von Extrusionsöffnungen zu Endlosformkörpern extrudiert. Dann werden die Endlosformkörper in einem Luftspalt verstreckt, wodurch die gewünschte Faserstärke eingestellt wird, und anschließend durch ein Fällbad geleitet, wo sie koagulieren.

Der Vorteil von Lyocell-Fasem oder entsprechenden Endlosformkörpern liegt einerseits in dem besonders umweltfreundlichen Herstellverfahren, das eine nahezu vollständige Rückgewinnung des Aminoxids ermöglicht, andererseits an den hervorragenden textilen Eigenschaften der Lyocell-Fasern.

Problematisch ist bei dem Verfahren allerdings, dass die frisch extrudierten Endlosformkörper eine starke Oberflächenklebrigkeit aufweisen, die sich erst bei Kontakt mit einem Fällungsmittel verringert. Bei der Durchleitung der Endlosformkörper durch den Luftspalt besteht daher die Gefahr, dass die Endlosformkörper sich gegenseitig berühren und sofort miteinander verkleben. Die Gefahr von Verklebungen kann durch Anpassung der Betriebs- und Verfahrensparameter wie Zugspannung im Luftspalt, Luftspalthöhe, Fadendichte, Viskosität, Temperatur und Spinngeschwindigkeit reduziert werden. Treten solche Verklebungen jedoch auf, beeinflusst das den Herstellprozess und die Faserqualität negativ, da Verklebungen zu Abrissen und zu Dickstellen in den Endlosformkörpern führen kennen. Im ungünstigsten Fall muss das Herstellverfahren unterbrochen und der Spinnprozess erneut angefahren werden, was hohe Kosten verursacht.

Heutzutage wird von den Herstellern von Endlosformkörpern, wie beispielsweise den Gamherstellen als Teil der textilen Weiterverarbeitungskette, Verklebungsfreiheit gefordert d.h. die einzelnen Filament-Stapel dürfen nicht zusammengeklebt sein, da es sonst zu Unregelmäßlgkelten bei beispielsweise der Garndicke kommt.

Eine hohe Wirtschaftlichkeit bei der Herstellung von Lyocell-Fasem, hauptsächlich Stapelfasern und Filamente, lässt sich jedoch nur erreichen, wenn die Spinndüsenöffnungen in geringem Abstand voneinander angeordnet sind. Ein geringerer Abstand erhöht aber die Gefahr von Verlobungen im Luftspalt aufgrund zufälliger Berührung der Endlosformkörper.

Zur Verbesserung der mechanischen sowie textilen Eigenschaften von Lyocell-Fasem ist es von Vorteil, wenn der Luftspalt so groß wie möglich ist, da sich bei einem großen Luftspalt die Verstreckung der Fäden über eine größere Lauflänge verteilt und Spannungen In den gerade extrudierten Endlosformkörpern leichter abgebaut werden können. Je größer jedoch der Luftspalt ist, um so geringer ist die Spinnsicherheit bzw. um so größer ist die Gefahr, dass das Herstellverfahren aufgrund von Spinnfadenverklebungen unterbrochen werden muss.

Ausgehend von den Grundlagen der US 4,246,221 gibt es im Stand der Technik einige Lösungen, mit denen versucht wird, sowohl die Wirtschaftlichkeit als auch die Spinnsicherheit bei der Herstellung von Endlosformkörpern aus einer Spinnlösung enthaltend Cellulose und tertiäres Aminoxid zu verbessern.

So ist in der US 4,261,943 und in der US 4,416,698 ein Verfahren beschrieben, bei dem die Endlosformkörper unmittelbar nach der Extrusion mit einem Nichtlösungsmittel in Kontakt gebracht werden, um die Obertlächenklebrigkeit herabzusetzen. Anschließend werden die Endlosformkörper durch ein Fällbad geleitet. Die zusätzliche Benetzung der Endlosformkörper durch das Nichtlösungsmittel vor der Durchleitung durch das Fällbad ist für den kommerziellen Einsatz jedoch zu aufwändig und zu teuer.

Ein anderer Weg zur Erhöhung der Spinndichte, d.h. der Anzahl von Extrusionsöffnungen pro Flächeneinheit, wird in der WO 93/19230 beschritten: Bei der dort beschriebenen Vorrichtung werden die Endlosformkörper unmittelbar nach der Extrusion durch horizontales Anblasen quer zur Extrusionsrichtung mit einem Kühlgasstrom gekühlt. Durch diese Maßnahme wird die Oberflächenklebrigkeit der Endlosformkörper verringert und der Luftspalt kann verlängert werden.

Problematisch ist bei dieser Lösung allerdings, dass der Kühlgasstrom in Wechselwirkung mit dem Extrusionsprozess an den Extrusionsöffnungen tritt und ihn negativ beeinflussen kann. Insbesondere hat sich bei dem Verfahren der WO 93/19230 herausgestellt, dass die ersponnenen Fäden keine gleichmäßige Qualität aufweisen, da sie nicht alle in gleicher Weise vom Kühlgasstrom erfasst werden. Die Gefahr von Verklebungen wird jedenfalls beim Verfahren der WO 98/19230 nicht ausreichend vermindert.

Um eine gleichmäßige Beblasung der Endlosformkörper unmittelbar nach dem Austritt aus den Extrusionsöffnungen zu ermöglichen, wird bei der Vorrichtung der WO 95/01470 eine Ringdüse verwendet, bei der die Extrusionsöffnungen auf einer im Wesentlichen kreisringförmigen Fläche verteilt sind. Die Beblasung mit einem Kühlgasstrom findet dabei durch die Mitte der Ringdüse und den Kreisring der Endlosformkörper hindurch in radialer Richtung horizontal nach außen statt. Die Luftströmung wird dabei an ihrem Austritt aus der Beblasungseinrichtung laminar gehalten. Die Ausbildung einer laminaren Luftströmung wird offensichtlich durch die in der Patentschrift angeführte Luftleiteinrichtung wesentlich verstärkt.

Die WO 95/04173 betrifft eine konstruktive Weiterbildung der Ringdüse und der Beblasungseinrichtung, die im Wesentlichen auf der Vorrichtung der WO 95/01470 beruht.

Zwar führen die Lösungen der WO 95/01470 und der WO 95/04173 tatsächlich zu einer gleichmäßigeren Anblasung, jedoch führt die Ringanordnung der Endlosformkörper zu Problemen bei der Durchleitung der Endlosformkörper durch das Fällbad: Da die Endlosformkörper als Kreisring in das Fällbad eintauchen und die Fällungsflüssigkeit im Fällbad mit sich ziehen, entsteht im Bereich zwischen den Endlosformkörpern ein mit Fällungsflüssigkeit unterversorgter Bereich, der zu einer Ausgleichsströmung durch den Ring der Endlosformkörper hindurch und zu einer aufgewühlten Fällbadoberfläche führt, was wiederum das Auftreten von Faserverklebungen zur Folge hat. Außerdem ist auch bei den Lösungen der WO 95/01470 und der WO 95/04173 zu beobachten, dass die für die mechanischen und textilen Produkteigenschaften wesentlichen Extrusionsbedingungen an den Extrusionsöffnungen nur schwer zu steuern sind.

Als eine Alternative zu den Ringdüsenanordnungen sind im Stand der Technik segmentierte Rechteckdüsenanordnungen entwickelt worden, d.h. Düsen, bei denen die Extrusionsöffnungen auf einer im Wesentlichen rechteckigen Grundfläche im Wesentlichen reihenförmig angeordnet sind. Eine solche segmentierte Rechteckdüsenanordnung ist in der WO 94/28218 gezeigt. Bei dieser Vorrichtung findet eine Beblasung mit einem Kühlgasstrom quer zur Extrusionsrichtung statt, wobei sich der Kühlgasstrom entlang der längeren Seite der Rechteckdüsenanordnung erstreckt. Nach der Passage durch die Endlosformkörper wird bei der Vorrichtung der WO 94/28218 der Kühlgasstrom wieder abgesaugt. Die Absaugung ist notwendig, damit der Luftstrom durch den gesamten Querschnitt des Luftspalts geleitet werden kann.

In der WO 98/18983 ist das Konzept der Rechteckdüsen mit in Reihen angeordneten Extrusionsöffnungen weiter entwickelt. Dabei stellt die WO 98/18983 darauf ab, dass die Extrusionsöffnungen in einer Reihe anders beabstandet sind als die Reihen der Extrusionsöffnungen untereinander.

In der WO 96/17118 wird zur Kühlung konditionierte Luft eingesetzt, die einen Wassergehalt von 0,1 g bis 7 g Wasserdampf je Kilogramm trockene Luft aufweist und deren relative Feuchtigkeit weniger als 85 % beträgt. Die Anblasgeschwindigkeit betrug 0,8 m/s.

In der WO 01/68958 wird eine Beblasung im Wesentlichen quer zur Durchleitungsrichtung der Endlosformkörper durch den Luftspalt mit einer unterschiediichen Zielrichtung beschrieben. Die Beblasung mittels eines Luftstromes dient nicht zur Kühlung der Endlosformkörper, sondern zur Beruhigung der Fällbadoberfläche des Fällbades in dem Bereich, In dem die Endlosformkörper in das Fällbad bzw. in den Spinntrichter eintauchen: Nach der Lehre der WO 01/68958 lässt sich die Länge des Luftspaltes erheblich vergrößern, wenn die Beblasung an den Eintauchstellen der Kapilliarscharen in das Fällbad wirksam wird, um die Bewegung der Spinnbadoberfläche zu beruhigen. Es wird vermutet, dass die für Spinntrichter typischen starken Badturbulenzen durch Anbringen einer Beruhigungsbeblasung an der Spinnbadoberfläche reduziert werden, indem durch die Beblasung ein Flüssigkeitstransport an der Fällbadoberfläche durch die Spinnfäden hindurch induziert wird. Dazu ist nach der Lehre der WO 01/68958 ein lediglich schwacher Luftstrom vorgesehen. Wesentlich bei der Lehre WO 01/68958 ist dabei, dass die Beblasung kurz vor dem Eintritt der Endlosformkörper in die Spinnbadoberfläche stattfindet Mit den in der WO 01/68958 angegebenen Geschwindigkeiten des Luftstromes und an der Stelle, an der der Luftstrom zur Spinnbadberuhigung eingesetzt wird, lassen sich jedoch keinerlei Kühleffekte bei den Endlosformkörpern mehr bewirken.

Somit ist bei der Vorrichtung der WO 01/68958 zusätzlich zu der dort beschriebenen Anblasung kurz vor dem Eintritt der Endlosformkörper in die Spinnbadoberfläche noch eine Kühlung der Spinnfäden nahe der Extrusionsöffnungen notwendig, wie sie aus dem Stand der Technik bekannt ist. Die zusätzlich notwendige Kühlung führt jedoch zu einer sehr aufwändigen Anlage.

In der WO 00/06813 sind ein Verfahren und eine Vorrichtung zur verbesserten Kühlung von Vliesstoff-Filamenten mit einer Turbulenz erzeugenden Stabanordnung beschrieben. Die Stabanordnung ist in einer Kühlgasströmung zwischen der Beblasungseinrichtung und den Filamenten angeordnet. Die Geschwindigkeit des Kühlgasstromes beträgt zwischen 100 ft/min und 500 ft/min (ca. 0,5 m/s bis 2,5 m/s). Ohne die Stabanordnung war der Turbulenzgrad der Kühlgasströmung mit 1 % bis 3 % sehr niedrig.

In Anbetracht der Nachteile der aus dem Stand der Technik bekannten Lösungen, liegt der Erfindung die Aufgabe zugrunde, ein Verfahren zu schaffen, durch das sich bei geringem konstruktiven Aufwand große Luftspaltlängen mit hoher Spinndichte bei gleichzeitig hoher Spinnsicherheit kombinieren lassen.

Diese Aufgabe wird erfindungsgemäß für das eingangs genannte Verfahren mit den Merkmalen des kennzeichnenden Teils von Anspruch 1 gelöst.

Bislang ist man im Stand der Technik wohl davon ausgegangen, dass eine Kühlung bei Lyocell-Spinnfäden nur durch einen laminaren Kühlluftstrom erfolgen kann, da ein laminarer Kühlgasstrom bei den Endlosformkörpern eine geringere Obefflächenreibung erzeugt als ein turbulenter Strom und die Endlosformkörper daher mechanisch weniger belastet.

Überraschend wurde nun gefunden, dass bei einem turbulent und mit hoher Geschwindigkeit aus der Blasvorrichtung austretenden Kühlgasstrom bei gleicher Kühlleistung wie bei einem laminaren Kühlgasstrom weitaus geringere Blasluftmengen notwendig scheinen als ursprünglich vermutet. Durch die reduzierte Blasgasmenge, die vorzugsweise aufgrund kleiner Gasstromquerschnitte erreicht wird, lässt sich die Oberflächenreibung an den Endlosformkörpern trotz turbulenter Anblasung klein halten, so dass keine negative Beeinflussung des Spinnvorgangs stattfindet.

Die positive Wirkung des turbulenten Kühlgasstroms ist umso erstaunlicher, da laut allgemeiner Strömungslehre eine verbesserte Kühlwirkung bei turbulenter Strömung nur bei einer geringen Reihenzahl zu erwarten gewesen wäre. Um den Spinnprozess wirtschaftlich mit einer hohen Lochdichte zu betreiben, ist es nötig, eine Vielzahl von Reihen vorzusehen, so dass nach der Strömungslehre eigentlich nur ein Bruchteil der Endlosformkörper von den verbesserten Wärmetauschbedingungen profitieren sollte. Dennoch ergab sich bei der Verwendung eines turbulenten Kühlgasstromes eine verbessertes Spinnverhalten auch in den letzten, vom Kühlgasstrom am entferntesten Reihen.

Es wäre bei turbulenter und mit hoher Geschwindigkeit durchgeführter Kühlbeblasung weiter zu erwarten gewesen, dass durch die hohen Geschwindigkeiten die Spinnfäden verblasen und damit verkleben würden. Überraschenderweise hat sich jedoch gezeigt, dass keine Beeinträchtigung der Spinnfäden erfolgt, sondern

im Gegenteil beim Einsatz von kleinen turbulenten Gasströmen der Gasbedarf drastisch reduziert werden kann und die Gefahr von Verklebungen sehr gering ist. Fasertiter von unter 0,6 dtex können mit turbulenten Kühlgasströmen problemlos ersponnen werden. Der Aspekt der turbulenten Gasstromkühlung ist bei Spinnverfahren auch für sich genommen unabhängig von den übrigen erfindungsgemäßen Weiterbildungen vorteilhaft.

Eine mit der Breite des Kühlgasstromes in Durchleitungsrichtung und der Geschwindigkeit des Kühlgasstromes gebildete Reynolds-Zahl kann bei einer Ausbildung der Erfindung wenigstens 2.500, vorzugsweise wenigstens 3.000 betragen.

Die Geschwindigkeit des Kühlgasstromes beträgt mindestens 30 m/s, wobei in ersten Versuchen sehr gute Ergebnisse mit Strömungsgeschwindigkeiten von wenigstens 40 m/s und noch bessere Ergebnisse mit Strömungsgeschwindigkeiten von über 50 m/s erzielt wurden.

Um eine Vielzahl von Fadenreihen zu durchdringen, ist es sehr bedeutend, dass der Kühlstrom energieintensiv an die Fadenscharen herangeführt und durchgeleitet wird. Um dieses Erfordernis zu erfüllen, muss eine Beblasungseinrichtung zur Erzeugung des Kühlgasstromes derart ausgestaltet sein, dass zum einen die spezifische Blaskraft hoch ist, und zum anderen die von der Beblasungseinrichtung erzeugte Verteilung der Einzelkühlströme den Anforderungen der zu kühlenden Fadenscharen entspricht.

Die Verteilung der Einzelkühlströme soll gemäß einer vorteilhaften Ausgestaltung ein im Wesentlichen ebenes Strahlbild (Flachstrahl) ergeben, wobei die Breite des im Wesentlichen ebenen Strahles mindestens die Breite des zu kühlenden Fadenvorhangs aufweisen muss. Vorzugsweise kann die ebene Strahlmusterverteilung auch durch nebeneinander angeordnete einzelne Rund-, Oval, Rechteck - oder sonstige Vieleckstrahlen ausgebildet sein, auch mehrere übereinander angebrachte Reihen sind erfindungsgemäß zur Bildung einer ebenen Strahlmusterverteilung möglich.

Die spezifische Blaskraft wird wie folgt bestimmt: Eine Düse zur Erzeugung des Kühlgasstromes mit einer rechteckigen (flachen) Strahlmusterverteilung und einer maximalen Breite von 250 mm wird in Blasrichtung senkrecht zu einer auf einer Wägevorrichtung montierten Prallplatte mit einer Fläche von 400 x 500 mm montiert. Der Düsenaustritt, der den Austritt des Kühlgasstromes aus der Beblasungseinrichtung bildet, ist mit 50 mm zur Prallplatte beabstandet. Die Düse wird mit Druckluft mit 1 bar Überdruck beaufschlagt und die auf die Prallplatte einwirkende Kraft wird gemessen und durch die Breite der Düse in Millimeter geteilt. Der sich daraus ergebende Wert ist die spezifische Blaskraft der Düse mit der Einheit [mN/mm].

In einer vorteilhaften Ausgestaltung weist eine Düse eine spezifische Blaskraft von mindestens 5 bis 10 mN/mm auf. Durch eine Blaskraft von wenigstens 10 mN/mm lassen sich dabei höhere Kühlwirkungen erzielen.

Die Rechteckdüse kann mehrere in Reihen angeordnete Extrusionsöffnungen aufweisen, wobei die Reihen in Kühlgasstromrichtung gestaffelt sein können. Um eine gute Einwirkung des Kühlgasstromes auch in der in Kühlgasstromrichtung hintersten Reihe der Endlosformkörper zu erreichen, kann bei der Rechteckdüse die Anzahl der Extrusionsöffnungen in Reihenrichtung größer sein als in Kühlgasstromrichtung.

Bei Verwendung von Rechteckdüsen kann insbesondere die Umleitung der Endlosformkörper als ein im Wesentlichen ebener Vorhang innerhalb des Fällbades in Richtung zur Fällbadoberfläche hin stattfinden, so dass eine Bündelung der Endlosformkörper, d.h. ein Zusammenführen der Endlosformkörper auf einen imaginären Punkt, außerhalb des Fällbades stattfinden kann.

Gemäß einer weiteren vorteilhaften Ausgestaltung weist der Luftspalt unmittelbar nach der Extrusion einen Abschirmungsbereich und einen durch den Abschirmungsbereich von den Extrusionsöffnungen getrennten Kühlbereich auf, der durch den als Kühlgasstrom ausgebildeten Gasstrom bestimmt ist. Der Kühlbereich ist demnach derjenige Bereich, in dem der Kühlgasstrom auf die Endlosformkörper auftrifft und diese kühlt.

Diese Ausgestaltung führt insbesondere in Kombination mit dem turbulenten Kühlgasstrom überraschenderweise zu einer höheren Spinndichte und zu einem längeren Luftspalt als bei den herkömmlichen Vorrichtungen, bei denen der Kühlbereich direkt an die Extrusionsöffnungen heranreicht und kein Abschirmungsbereich vorhanden ist.

Es scheint, als ob durch den Abschirmungsbereich, also durch die Beabstandung der Kühlgasstromgrenze von den Extrusionsöffnungen, eine Abkühlung der Extrusionsöffnungen und damit eine negative Beeinflussung des für die Ausbildung der mechanischen und textilen Eigenschaften extrem wichtigen Extrusionsprozesses an den Extrusionsöffnungen vermieden wird. Somit lässt sich bei der erfindungsgemäßen Ausgestaltung der Extrusionsprozess mit exakt festlegbaren und exakt einhaltbaren Parametern, insbesondere mit exakter Temperaturführung der Formmasse bis zu den Extrusionsöffnungen, durchführen.

Ein Grund für die überraschende Wirkung der erfindungsgemäßen Lösung könnte darin liegen, dass sich die Endlosformkörper in einem unmittelbar auf die Extrusion folgenden Bereich aufweiten bilden. Die Zugkraft, die die Verstreckung der Endlosformkörper bewirkt, beginnt erst hinter diesem Aufweitungsbereich zu wirken. Im Aufweitungsbereich selbst weisen die Endlosformkörper noch keine Orientierung auf und sind weitgehend anisotrop. Durch den Abschirmungsbereich wird offenbar eine für die Fasereigenschaften schädliche Einwirkung des Kühlgasstromes im anisotropen Aufweitungsbereich vermieden. Die Kühlwirkung scheint bei der erfindungsgemäßen Lösung erst dann einzusetzen, wenn die Zugkraft auf die Endlosformkörper einwirkt und eine allmähliche Gleichrichtung der Moleküle der Endlosformkörper bewirkt.

Um zu vermeiden, dass die Oberfläche des Fällbades durch den Kühlgasstrom aufgewühlt wird, kann gemäß einer besonders vorteilhaften Ausgestaltung vorgesehen sein, dass der Luftspalt neben dem ersten Abschirmungsbereich einen zweiten Abschirmungsbereich aufweist, durch den der Kühlbereich von der Fällbadoberfläche getrennt ist. Durch den zweiten Abschirmungsbereich wird vermieden, dass der Kühlgasstrom im Eintauchbereich der Fadenscharen die Fällbadoberfläche berührt und Wellen erzeugt, die die Endlosformkörper beim Eintritt in die Fällbadoberfläche mechanisch belasten könnten. Der zweite Abschirmungsbereich ist insbesondere dann sinnvoll, wenn der Kühlgasstrom eine hohe Geschwindigkeit aufweist.

Die Qualität der hergestellten Endlosformkörper lässt sich gemäß einer weiteren vorteilhaften Ausgestaltung überraschend verbessern, wenn die Neigung des Kühlgasstromes in Durchleitungs- bzw. Extrusionsrichtung größer ist als die Aufweitung des Kühlgasstromes in Stromrichtung. Bei dieser Ausgestaltung weist der Kühlgasstrom an jeder Stelle im Bereich der Endlosformkörper eine in Durchleitungsrichtung weisende Strömungskomponente auf, die die Verstreckung im Luftspalt unterstützt.

Eine besonders gute Abschirmung des Extrusionsprozesses vom Einfluss des Kühlgasstromes wird dann erreicht, wenn der Abstand des Kühlbereiches von jeder Extrusionsöffnung wenigstens 10 mm beträgt. In diesem Abstand können auch stärkere Kühlgasströme nicht mehr auf den Extrusionsprozess in den Extrusionsöffnungen einwirken.

Insbesondere kann der Abstand I des Kühlbereiches von jeder Extrusionsöffnung in Millimeter gemäß einer weiteren vorteilhaften Ausgestaltung die folgende (dimensionslose) Ungleichung erfüllen:

$$I > H + A \cdot [\tan(\beta) - 0{,}14],$$

wobei H der Abstand der Kühlgasstromoberkante von der Ebene der Extrusionsöffnungen zum Austritt des Kühlgasstromes in Millimeter ist. A ist der Abstand zwischen dem Austritt des Kühlgasstromes und der in Stromrichtung letzten Reihe der Endlosformkörper in Millimeter quer zur Durchleitungsrichtung, in der die Endlosformkörper durch den Luftspalt geleitet werden, üblicherweise die Horizontalrichtung. Als β ist der Winkel in Grad zwischen der Kühlstahlrichtung und der Richtung quer zur Durchleitungsrichtung bezeichnet. Die Kühlgasstromrichtung wird dabei im Wesentlichen durch die Mittenachse, oder - bei ebenen Kühlströmen - die Mittenebene des Kühlgasstromes bestimmt. Bei Befolgung dieser Bemessungsformel können die Spinnqualität und die Spinnsicherheit überraschend stark verbessert werden.

Der Winkel β kann dabei einen Wert von bis zu 40° annehmen. Der Wert H sollte unabhängig vom Winkel β in jedem Fall größer 0 sein, um eine Beeinflussung des Extrusionsprozesses zu vermeiden. Der Abstand A kann mindestens einer Dicke E des Vorhangs der Endlosformkörper quer zur Durchleitungsrichtung entsprechen. Die Dicke E des Fadenvorhanges beträgt höchstens 40 mm, vorzugsweise höchstens 30 mm, noch mehr bevorzugt höchstens 25 mm. Der Abstand A kann insbesondere um 5 mm oder, bevorzugt, um 10 mm größer als die Dicke E des Fadenvorhanges sein.

Ebenso hat sich überraschend herausgestellt, dass sich die Spinnqualität und die Spinnsicherheit erhöhen, wenn zwischen der Höhe L des Luftspaltes in Durchleitungsrichtung in Millimeter, dem Abstand 1 des Kühlbereiches von den Endlosformkörpem in Durchleitungsrichtung in Millimeter, dem Abstand A zwischen dem Austritt des Kühlgasstromes und der In Stromrichtung letzten Reihe der Endlosformkörper quer zur Durchleitungsrichtung in Millimeter und der Höhe B des Kühlgasstromes in Durchleitungsrichtung in Millimeter folgende (dimensionslose) Beziehung in dem von den Endlosformkörpem eingenommenen Bereich des Luftspaltes erfüllt ist:

$$L > I + 0{,}28 \cdot A + B$$

Die Erfindung ist insbesondere zur Herstellung von Endlosformkörpern aus einer Spinnlösung geeignet, die vor ihrer Extrusion eine Nullscherviskosität von mindestens 10000 Pas, vorzugsweise von mindestens 15000 Pas, bei 85°C Meßtemperatur aufweisen. Durch die Anpassung der Viskosität der Formmasse, was im wesentlichen durch die Auswahl des Zellstofftyps sowie der Cellulose und Wasserkonzentration in der Spinnlösung erfolgt, wird dem Extrudat eine gewisse Eigen- bzw. Grundfestigkeit mitgegeben, damit der Verzug zu Formkörpern erfolgen kann. Gleichzeitig kann man noch durch Zugabe von Stabilisatoren sowie durch die Reaktionsführung bei der Lösungsherstellung den notwendigen Viskositätsbereich einstellen.

Es zeigen:

Fig. 1    eine perspektivische Darstellung einer erfindungsgemäßen Vorrichtung in einer schematische Übersicht;

Fig. 2    eine erste Ausführungsform der in Fig. 1 dargestellten Vorrichtung in einem schematischen Schnitt entlang der Ebene II-II der Fig. 1;

Fig. 3    eine schematische Darstellung der Vorrichtung der Fig. 1 zur Erläuterung von geometrischen Kenngrößen;

Fig. 4    eine schematische Darstellung zur Erläuterung der Vorgänge in einem Endlosformkörper unmittelbar nach der Extrusion.

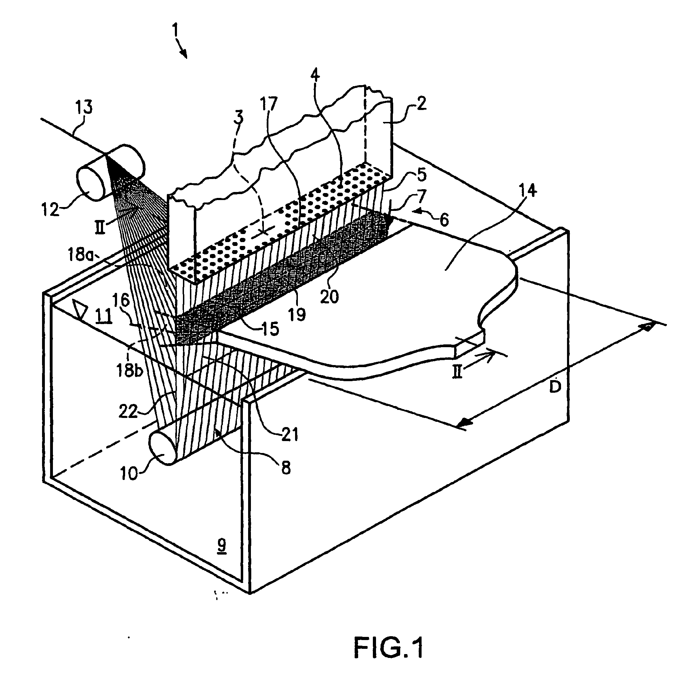

Zunächst wird der Aufbau einer Vorrichtung anhand der Fig. 1 beschrieben.

Fig. 1 zeigt eine Vorrichtung 1 zur Herstellung von Endlosformkörpem aus einer Formmasse (nicht gezeigt). Die Formmasse kann insbesondere eine Spinnlösung sein, die Cellulose, Wasser und tertiäres Aminoxid enthält. Als tertiäres Aminoxid kann N-Methyl-Morpholin-N-Oxid verwendet werden. Die Nullscherviskosität der Formmasse bei etwa 85° C liegt zwischen 10000 bis ca. 30000 Pas.

Die Vorrichtung 1 weist einen Extrusionskopf 2 auf, der an seinem unteren Ende mit einer im Wesentlichen rechteckigen, vollständig bebohrten Düsenplatte 3 als Grundfläche versehen ist. In der Düsenplatte 3 ist eine Vielzahl von in Reihen angeordneten Extrusionsöffnungen 4 vorgesehen. Die in den Figuren gezeigte Reihenzahl dient lediglich der Veranschaulichung.

Die Formmasse wird erwärmt und durch die vorzugsweise beheizten Extrusionsöffnungen geleitet, wo durch jede Extrusionsöffnung ein Endlosformkörper 5 extrudiert wird. Wie in Fig. 1 schematisch dargestellt ist, kann jeder Endlosformkörper 5 im Wesentlichen fadenförmig ausgebildet sein.

Die Endiosformkörper 5 werden in einen Luftspalt 6 extrudiert, den sie in einer Durchleitungs- oder Extrusionsrichtung 7 durchqueren. Gemäß Fig. 1 kann die Extrusionsrichtung 7 in Schwerkraftrichtung weisen.

Nach Durchquerung des Luftspaltes 6 tauchen die Endlosformkörper 5 als ein im Wesentlichen ebener Vorhang in ein Fällbad 9 aus einem Fällungsmittel beispielsweise Wasser, ein. Im Fällbad 9 befindet sich ein Umlenkorgan 10, durch das der ebene Vorhang 8 von der Extrusionsrichtung in Richtung der Fällbadoberfläche als Vorhang 11 umgelenkt und dabei zu einer Bündelungseinrichtung 12 geleitet wird. Durch die Bündelungseinrichtung 12 wird der ebene Vorhang zu einem Fadenbündel 13 zusammengefasst. Die Bündelungseinrichtung 12 ist außerhalb des Fällbades 9 angeordnet.

Alternativ zum Umlenkorgan 10 können die Endlosformkörper in Durchleitungsrichtung 7 auch durch das Fällbad hindurchgeleitet werden und durch einen Spinntrichter (nicht gezeigt) an der der Fällbadoberfläche 11 entgegengesetzten Seite an der Unterseite des Fällbades austreten. Diese Ausführungsform ist jedoch insofern nachteilig, als der Verbrauch an Fällbadflüssigkeit hoch ist, im Spinntrichter Turbulenzen auftreten und die Trennung von Fällbad und Faserkabel am Trichteraustritt problematisch ist.

Im Bereich des Luftspaltes 6 ist eine Beblasungseinrichtung 14 angeordnet, aus der ein Kühlgasstrom 15 austritt, dessen Achse 16 quer zur Durchleitungsrichtung 7 verläuft oder der wenigstens eine Hauptströmungskomponente in diese Richtung aufweist. Beim Ausführungsbeispiel der Fig. 1 ist der Kühlgasstrom 15 im wesentlichen eben.

Unter der Bezeichnung "ebener Gasstrom" wird dabei ein Kühlgasstrom verstanden, dessen Höhe B quer zur Richtung 16 des Gasstromes kleiner, vorzugsweise wesentlich kleiner, ist als die Breite D des Gasstromes in Reihenrichtung und der von festen Wänden beabstandet ist. Wie in der Fig. 1 zu erkennen ist, verläuft die Breitenrichtung D des Gasstromes entlang der langen Kante 17 der Rechteckdüse 3.

Durch die beiden Grenzbereiche 18a und 18b des Kühlgasstromes 15, wobei 18a den der Düsenplatte 3 zugewandten oberen Grenzbereich und 18b den der Fällbadoberfläche 11 zugewandten unteren Grenzbereich bezeichnet, wird ein Kühlbereich 19 bestimmt. Da die Temperatur des ebenen Gasstromes 15 niedriger ist als die Temperatur der noch vom Extrusionsprozess aufgeheizten Endlosformkörper 5 findet im Kühlbereich eine Wechselwirkung des ebenen Gasstromes 15 mit den Endlosformkörpern 5 und damit eine Kühlung und Verfestigung der Endlosformkörper statt.

Der Kühlbereich 19 ist von den Extrusionsöffnungen 4 durch einen ersten Abschirmungsbereich 20 getrennt, in dem keine Kühlung der Endlosformkörper 5 stattfindet.

Von der Fällbadoberfläche 11 ist der Kühlbereich 19 durch einen zweiten Abschirmungsbereich 21 getrennt, in dem ebenfalls keine Kühlung und/oder keine Luftbewegung stattfindet.

Der erste Abschirmungsbereich 20 hat die Funktion, die Extrusionsbedingungen direkt an den Extrusionsöffnungen möglichst unbeeinflusst durch die nachfolgende Kühlung durch den Kühlgasstrom im Kühlbereich 19 zu lassen. Der zweite Abschirmungsbereich 21 hat dagegen die Funktion, die Fällbadoberfläche 11 vom Kühlgasstrom abzuschirmen und möglichst ruhig zu halten. Eine Möglichkeit, die Fälibadoberfläche 11 ruhig halten, besteht darin, im zweiten Abschirmungsbereich 21 die Luft möglichst unbewegt zu halten.

Die Beblasungseinrichtung 14 zur Erzeugung des Kühlgasstromes 15 weist eine ein- oder mehrreihige Mehrkanaldüse auf, wie sie z.B. von der Firma Lechler GmbH in Metzingen, Deutschland, angeboten wird. Bei diese Mehrkanaldüse wird der Kühlgasstrom 15 durch eine Vielzahl von kreisrunden Einzelströmen gebildet mit einem Durchmesser zwischen 0,5 mm und 5 mm, vorzugsweise um 0,8 mm, die sich nach einer von ihrem Durchmesser und ihrer Strömungsgeschwindigkeit abhängigen Laufstrecke zu einem ebenen Gasstrom verbinden. Die Einzelströme treten mit einer Geschwindigkeit von wenigstens 20 m/s, vorzugsweise wenigstens 30 m/s aus. Insbesondere sind Geschwindigkeiten von mehr als 50 m/s zur Erzeugung turbulenter Kühlgasströme bei guter Spinnsicherheit möglich. Die spezifische Blaskraft einer derart ausgeführten Mehrkanaldüse sollte mindestens 5 mN/mm betragen, vorzugsweise mindestens 10 mN/mm. Die Reynolds-Zahl beträgt mindestens 2.500, bei sehr hohen Geschwindigkeiten mindestens 3.500.

Die vom Kühlgasstrom zu durchdringende Dicke E des Vorhanges von Endlosformkörpern 5, gemessen quer zur Durchleitungsrichtung 7, beträgt beim Ausführungsbeispiel der Fig. 1 weniger als 40 mm. Diese Dicke wird im Wesentlichen dadurch bestimmt, ob in der in Gasstromrichtung 16 letzten Reihe 22 der Endlosformkörper 5 eine ausreichende Kühlwirkung durch den Kühlgasstrom im Kühlbereich 16 erzeugt wird. Je nach Temperatur und Geschwindigkeit des Kühlgasstromes sowie der Temperatur und Geschwindigkeit des Extrusionsprozesses im Bereich der Extrusionsöffnungen 4 sind auch Dicken E von weniger als 30 mm oder weniger als 25 mm möglich.

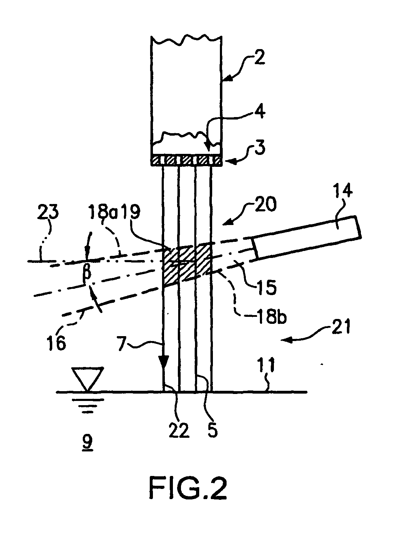

In der Fig. 2 ist eine besondere Ausführungsform der in Fig. 1 dargestellten Spinnvorrichtung 1 beschrieben. Dabei werden für die bereits in Fig. 1 beschriebenen Elemente der Vorrichtung 1 in Fig. 2 dieselben Bezugszeichen verwendet. Die Ausführungsform ist in einem schematischen Schnitt entlang der Ebene II der Fig. 1 dargestellt, die die Symmetrieebene in Breitenrichtung D des Stromes 15 bildet.

Zwischen der in Durchleitungsrichtung 7 gemessenen Höhe I des Abschirmungsbereiches 20 in Millimeter, der in Durchleitungsrichtung 7 gemessenen Höhe L des Luftspaltes 6, dem Abstand A vom Austritt des Kühlgasstromes 15 aus der Beblasungseinrichtung 14 bis zur letzten Reihe 22 der Endlosformkörper 5 in Millimeter und der Breite B des Kühlgasstromes 15 in Richtung quer zur Kühlgasstromrichtung 16 gilt die dimensionslose Beziehung:

$$L > I + 0,28 \cdot A + B$$

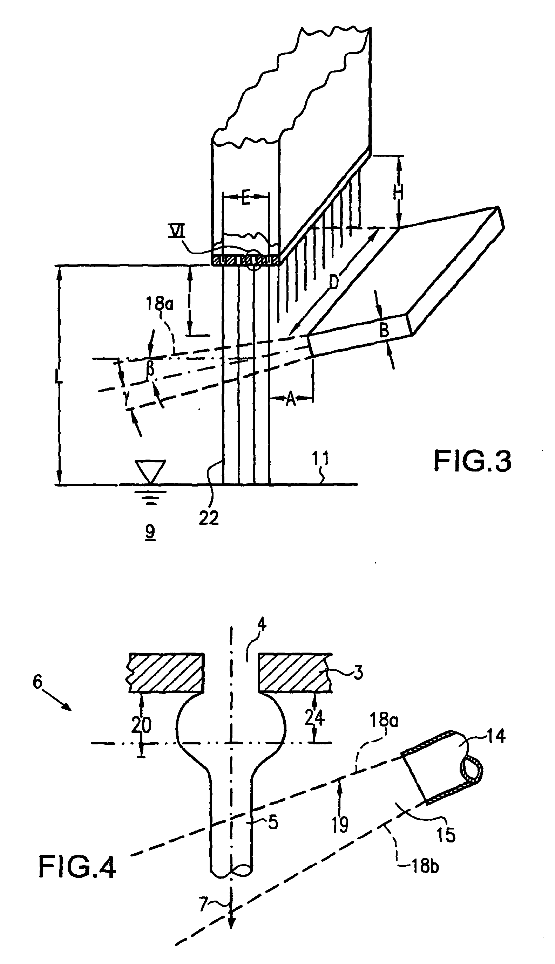

Der Abstand A kann dabei wenigstens der Dicke E des Vorhanges aus Endlosformkörpem 5 entsprechen, jedoch auch vorzugsweise 5 mm bzw. 10 mm größer als E sein. Die Größen L, I, A, B sind in der Fig. 3 dargestellt.

Wird ein Kühlgasstrom 15 mit rundem Querschnitt verwendet, so kann anstelle der Breite B des Kühlgasstromes 15 dessen Durchmesser genommen werden.

In Fig. 2 ist eine Ausführungsform gezeigt, bei der die Richtung 16 des Kühlgasstromes 15 um einen Winkel β gegen die Senkrechte 23 auf die Durchleitungsrichtung 7 geneigt ist. Auf diese Weise weist der Kühlgasstrom 15 eine Geschwindigkeitskomponente auf, die in Durchleitungsrichtung 7 weist.

Bei der Ausführungsform der Fig. 2 ist der Winkel β größer als der Ausbreitungswinkel γ des Kühlgasstromes. Durch diese Bemessungsregel verläuft der Grenzbereich 18a zwischen dem Gasstrom 15 und dem ersten Abschirmungsbereich 20 in Durchleitungsrichtung 7 geneigt. Der in Fig. 2 dargestellte Winkel β kann bis zu 40° betragen. Der Kühlgasstrom 15 weist an jeder Stelle im Kühlbereich 19 eine in Durchleitungsrichtung 7 weisende Komponente auf.

Bei der Ausführungsform der Fig. 2 ist neben der bereits erwähnten Ungleichung für die Luftspalthöhe L auch die folgende Ungleichung stets erfüllt, durch welche sich die Höhe I des ersten Abschirmungsbereichs 20 in Durchleitungsrichtung 7 bestimmt. Es gilt:

$$I > H + A \cdot [\tan(\beta) - 0,14],$$

wobei die Größe H den Abstand in Durchleitungsrichtung 7 zwischen den Extrusionsöffnungen 4 und der Oberkante des Kühlgasstromes 15 unmittelbar am Austritt aus der Beblasungseinrichtung 14 darstellt.

Insbesondere sollte zu keiner Stelle im Bereich der Extrusionsöffnungen die Höhe des ersten Abschirmungsbereiches 20 kleiner als 10 mm sein.

Die Höhe I des Abschirmungsbereiches lässt sich unter Zuhilfenahme der Fig. 4, in dem ein Ausführungsbeispiel beschrieben ist, wie folgt erläutern. In Fig. 4 ist das Detail VI der Fig. 3 dargestellt, wobei lediglich ein einziger Endlosformkörper 5 unmittelbar nach dem Austritt aus einer Extrusionsöffnung 4 in den Luftspalt 6 exemplarisch gezeigt ist.

Wie in Fig. 4 zu erkennen ist, weitet sich der Endlosformkörper 5 unmittelbar nach der Extrusion in einem Aufweitungsbereich 24 auf, bevor er unter Einwirkung der Zugkraft sich wieder auf in etwa den Durchmesser der Extrusionsöffnung 4 verringert. Der Durchmesser des Endlosformkörpers quer zur Durchleitungsrichtung 7 kann das bis zu Dreifache des Durchmessers der Extrusionsöffnung betragen.

Im Aufweitungsbereich 24 weist der Endlosformkörper noch eine relativ starke Anisotropie auf, die sich in Durchleitungsrichtung 7 allmählich unter Einwirkung der Zugkraft auf den Endlosformkörper verringert.

Im Gegensatz zu den aus dem Stand der Technik bekannten Beblasungsverfahren und -vorrichtungen erstreckt sich bei der erfindungsgemäßen Lösung gemäß Fig. 4 der Abschirmungsbereich 20 wenigstens über den Aufweitungsbereich 24. Dadurch wird vermieden, dass der Kühlgasstrom 15 auf den Aufweitungsbereich einwirkt.

Erfindungsgemäß ist vorgesehen, dass sich der erste Abschirmungsbereich 20 bis zu einem Bereich 25 erstreckt, in dem die Aufweitung des Endlosformkörpers 5 nur noch gering oder nicht mehr vorhanden ist. In Fig. 4 ist dargestellt, dass sich der Bereich 25 in Durchleitungsrichtung 7 hinter dem größten Durchmesser des Aufweitungsbereiches befindet. Vorzugsweise überlappen sich der Kühlbereich 19 und der Aufweitungsbereich 25 nicht, sondern folgen unmittelbar aufeinander.

Im Folgenden wird die Wirkung der Spinnvorrichtung und des erfindungsgemäßen Verfahrens anhand von Vergleichsbeispielen erläutert.

Bei den angegebenen Beispielen sowie in der Übersichtabelle 1 sind die Spinndichte, d.h. die Anzahl der Extrusionsöffnungen pro Quadratmillimeter, die Abzugsgeschwindigkeit, mit der das Fadenbündel 12 abgezogen wird, in Meter/Sekunde, die Formmassentemperatur in Grad Celsius, die Beheizungstemperatur der Extrusionsöffnungen in Grad Celsius, die Luftspalthöhe in Millimeter, die Reynolds-Zahl, die Geschwindigkeit des Kühlgasstromes unmittelbar am Austritt aus der Beblasungseinrichtung in Meter/Sekunde, der Abstand H in Millimeter, der Winkel β in Grad, der ersponnene Fasertiter in dtex, der Variationskoeffizient in Prozent, das subjektiv bewertete Spinnverhalten mit Noten zwischen 1 und 5, die Breite des Gaskühlstromes bzw. bei einem runden Gaskühlstrom dessen Durchmesser sowie die mit der Breite des Kühlgasstromes normierte Luftmenge in Liter/Stunde je mm Düsenbreite angegeben. Mit einer Note 1 wird das Spinnverhalten als gut, mit einer Note 5 als schlecht bewertet.

Der Variationskoeffizient wurde nach DIN EN 1973 mit dem Prüfgerät Lenzing Instruments Vibroskop 300 ermittelt.

Die Reynoldszahl als Maß für die Turbulenz eines Gasstromes wurde nach der Formel $Re = w_0 * B / \nu$ ermittelt, wobei wo die Austrittsgeschwindigkeit des Gases aus der Düse in m/s, B die Blasspaltbreite, bzw. den Lochdurchmesser der Blasvorrichtung in mm und $\nu$ die kinematische Viskosität des Gases darstellt. Die kinematische Viskosität $\nu$ wurde für Luft bei einer Temperatur von 20 °C mit $153{,}5 \times 10^{-7}$ $m^2/s$ angenommen. Werden andere Gase oder Gasgemische zur Erzeugung eines Kühlgasstromes erzeugt, kann der Wert von $\nu$ entsprechend angepasst werden.

In der Übersichtabelle 1 ist eine Zusammenfassung der Versuchsergebnisse dargestellt.

**Vergleichsbeispiel 1**

Eine NMMNO-Spinnmasse bestehend aus 13 % Cellulose Typ MoDo Crown Dissolving-DP 510-550, 76 % NMMNO und 11 % Wasser wurde mit einer Temperatur von 78°C stabilisiert mit Gallussäurepropylester einer ringförmigen Spinndüse mit einem Ringdurchmesser von ca. 200 mm zugeführt. Die Spinndüse bestand aus mehreren bebohrten Einzelsegmenten, die jeweils die Extrusionsöffnungen in Form von Kapillarbohrungen beinhalteten. Die Extrusionsöffnungen wurden auf eine Temperatur von 85°C aufgeheizt.

Der Raum zwischen der Fällbadoberfläche und den Extrusionsöffnungen wurde von einem Luftspalt von ca. 5 mm Höhe gebildet. Die Endlosformkörper durchliefen den Luftspalt ohne Beblasung. Die Koagulation der Endlosformkörper erfolgte im Spinnbad, in dem unterhalb der Extrusionsöffnungen ein Spinntrichter angeordnet war.

Die ringförmige Schar von Endlosformkörpern wurde im Spinntrichter durch dessen Austrittsfläche gebündelt und aus dem Spinntrichter herausgeführt. Die Länge des Spinntrichters in Durchleitungsrichtung betrug ca. 500 mm.

Das Spinnverhalten gestaltete sich sehr schwierig, da das ersponnene Fasermaterial viele Verklebungen aufwies. Die schlechten Bedingungen zeigten sich auch in einer starken Streuung der Faserfeinheit, deren Varianz bei diesem Vergleichsbeispiel bei über 30 % lag.

**Vergleichsbeispiel 2**

Beim Vergleichsbeispiel 2 wurde bei ansonsten gleichen Bedingungen zusätzlich eine von außen nach innen gerichtete Beblasung unmittelbar nach der Extrusion ohne einen ersten Abschirmungsbereich vorgenommen. Dabei erfolgte die Beblasung mit einer relativ niedrigen Geschwindigkeit von ca. 6 m/s.

Durch die Beblasung konnte die Höhe des Luftspaltes nur unwesentlich erhöht werden, die Spinnqualität und die Spinnsicherheit blieben gegenüber dem Vergleichsbeispiel 1 im Wesentlichen unverändert.

**Vergleichsbeispiel 3**

Die bei den Vergleichsbeispielen 1 und 2 verwendete Formmasse wurde beim Vergleichsbeispiel 3 bei einer Temperatur von ebenfalls 78°C einer Rechteckdüse zugeführt, die sich aus mehreren gebohrten Einzelsegmenten zusammensetzte. Die Rechteckdüse wies drei Reihen von Extrusionsöffnungen auf, die auf einer Temperatur von ca. 90°C gehalten wurden.

Unterhalb der Extrusionsöffnungen befand sind ein Fällbad, in dem ein Umlenkorgan angebracht war. Zwischen der Fällbadoberfläche und den Extrusionsöffnungen war ein Luftspalt von ca. 6 mm gebildet, den die Endlosformkörper als Vorhang durchliefen. Zur Unterstützung des Spinnvorgangs wurde eine Kühlbeblasung parallel zur Spinnbadoberfläche eingesetzt.

Die Koagulation der Endlosformkörper erfolgte im Fällbad, wo der Vorhang aus Endlosformkörpern durch das Umlenkorgan umgelenkt und schräg nach oben einen außerhalb des Fällbades angeordneten Bündelungseinrichtung zugeführt wurde. Durch die Bündelungseinrichtung wurde der Vorhang der Endlosformkörper zu einem Faserbündel zusammengeführt und dann an weitere Verarbeitungsschritte weitergeleitet.

Das Vergleichsbeispiel 3 wies ein leicht verbessertes Spinnverhalten auf, wobei jedoch immer wieder Spinnstörungen auftraten. Die Endlosformkörper verklebten teilweise; die Faserfeinheit wies starke Streuungen auf.

**Vergleichsbeispiel 4**

Beim Vergleichsbeispiel 4 wurde bei ansonsten zum Vergleichsbeispiel 3 identischen Bedingungen an einer langen Seite der Rechteckdüse eine Blaseinrichtung mit einer Breite B von 8 mm so angebracht, dass sich der Kühlbereich bis an die Extrusionsöffnungen erstreckte, also kein erster Abschirmungsbereich vorhanden war.

Der Kühlgasstrom wies am Austritt aus der Blaseinrichtung eine Geschwindigkeit von ca. 10 m/s auf.

Im Vergleich zum Vergleichsbeispiel 3 konnte bei der Anordnung des Vergleichsbeispiels 4 der Luftspalt nur unwesentlich erhöht werden, die erzielte Spinnsicherheit und die Faserdaten blieben gegenüber den Werten des Versuchsbeispiels 3 unverändert.

**Vergleichsbeispiel 5**

Bei diesem Vergleichsbeispiel wurde wie beim Vergleichsbeispiel 4 an einer langen Seite der Rechteckdüse eine Blaseinrichtung mit einer Kühlgasstrombreite von 6 mm beim Austritt aus der Blaseinrichtung so angebracht, dass sich der Kühlbereich ohne Zwischenlage eines Abschirmungsbereichs bis an die Extrusionsöffnungen erstreckte. In Abweichung zum Vergleichsbeispiel 4 wurde anstelle einer segmentierten Rechteckdüse eine vollflächig bebohrte Rechteckdüse verwendet.

Die Geschwindigkeit des Kühlgasstromes am Austritt an der Blaseinrichtung betrug ca. 12 m/s.

Beim Vergleichsbeispiel 5 konnte der Luftspalt auf ca. 20 mm vergrößert und die Spinnsicherheit erheblich verbessert werden. Bei den Faserdaten wurden allerdings keine Verbesserungen beobachtet, zumal auch immer wieder Verklebungen auftraten.

Bel den folgenden Vergleichsbeispielen 6 bis 8 wurde mittels mehrerer, in einer Reihe nebeneinander angeordneter Mehrkanal-Druckluftdüsen ein Kühlgasstrom erzeugt. Der Durchmesser einer jeden Druckluftdüse betrug ca. 0,8 mm. Die Austrittsgeschwindigkeit der Einzelkühlgasstömen aus der Siaseinrichtung betrug bei den Vergleichsbeispielen 6 bis 8 mehr als 50 m/s. Die Einzelkühlströme waren turbulent. Die Gasversorgung der Düse erfolgte mittels Druckluft von 1 bar Überdruck, zur Anpassung der Blasgeschwindigkeit wurde der Gasstrom mittels eines Ventils eingedrosseit

Der Spinnkopf wies eine vollflächig gebohrte Rechteckdüse aus Edelstahl auf. Ansonsten wurde das Spinnsystem der Vergleichsbeispiele 3 bis 5 verwendet

**Vergleichsbeispiel 6**

Beim Vergleichsbeispiel 6 wurde, wie beim Vergleichsbeispiel 5, die Mehrkanal-Druckluftdüse so angebracht, dass sich der Kühlbereich direkt an die Extrusionsöffnungen erstreckte, also kein erster Abschirmbereich vorhanden war.

Bei dieser Anordnung wurden keine verbesserten Ergebnisse beobachtet, das Spinnverhalten konnte nicht als zufriedenstellend bewertet werden.

**Vergleichsbeispiel 7**

Bei diesem Versuch wurde der Kühlgasstrom schräg nach oben In Richtung der Düse gerichtet und wies daher eine entgegen der Durchleitungsrichtung gerichtete Komponente auf.

Beim Vergleichsbeispiel 8 war das Spinnverhalten gegenüber dem Vergleichsbeispiel 7 verschlechtert.

**Vergleichsbeispiel 8**

Gegenüber dem Vergleichsbeispiel 7 wies der Kühlgasstrom eine Stromrichtung schräg nach unten In Richtung Spinnbadoberfläche auf. Der Kühlgasstrom wies demnach eine Geschwindigkeitskomponente In Durchleitungsrichtung auf.

Bei der Anordnung gemäß Vergleichsbeispiel 8 konnten die besten Ergebnisse erzielt werden. Der Variationskoeffizient der Endlosformkörper lag deutlich unter 10 %. Das Spinnverhalten war sehr zufriedenstellend und lies einigen Spielraum in Richtung feinerer Titer bzw. höhere Abzugsgeschwindigkeit zu.

Zu beachten ist in diesem Zusammenhang, dass bei den Vergleichsbeispielen 6, 7 bis 8 zwischen dem Kühlbereich und der Fällbadoberfläche ein zweiter Abschirmungsbereich vorhanden war, in dem die Luft im Wesentlichen ruhte.

### Übersichtstabelle 1

| Beispiel | | 1 | 2 | 3 | 4 | 5 | 6 | 7 | 8 |
|---|---|---|---|---|---|---|---|---|---|
| Lochdichte | | 1,86 | 1,96 | 1,86 | 0,99 | 2,81 | 3,18 | 3,18 | 3,18 |
| Abzugsgeschwindigkeit | | 40 | 30 | 30 | 32 | 34 | 31 | 35 | 40 |
| Spinnmassetemperatur | | 78 | 78 | 78 | 83 | 81 | 83 | 83 | 84 |
| Düsenheiztemperatur | | 85 | 85 | 80 | 100 | 98 | 100 | 100 | 102 |
| Luftspalt | L | 5 | 6 | 6 | 16 | 20 | 18 | 16 | 22 |
| Reynolds Zahl | | | | 782 | 5.211 | 4.690 | 3.388 | 3.648 | 3.908 |
| Geschwindigkeit am Kühlgasstromaustritt | | - | - | 6 | 10 | 12 | 65 | 70 | 75 |
| Abstand zwischen Austritt aus Blaseinrichtung und letzter Reihe der Endlosformkörper | A | - | - | 35 | 23 | 22 | 32 | 32 | 32 |
| Abstand zwischen den Extrusionsöffnungen und der Oberkante des Kühlgasstom-Austrittes in Durchleitungsrichtung | H | - | - | 0 | 0 | 0 | 0 | 10 | 10 |
| Winkel d. Beblasung | β | - | - | 0 | 0 | 0 | 0 | -10 | 20 |
| Titer | | 1,72 | 1,66 | 1,74 | 1,55 | 1,4 | 1,47 | 1,35 | 1,33 |
| Variationskoeffizent des Titers | | 30,3 | 23,5 | 25,8 | 18,5 | 24,3 | 18.6 | 21,1 | 7,6 |
| Spinnverhalten | | 4-5 | 4 | 4-5 | 4 | 3 | 3-4 | 4 | 1-2 |
| Kühlstrombreite / Einzelbohrungs-Durchm. | B | | | 2 | 8 | 6 | 0,8 | 0,8 | 0,8 |
| Gasmenge je mm Breite | | | | 43 | 288 | 259 | 39 | 42 | 45 |

Bei den Werten der Übersichtstabelle 1 ist bei den angegebenen Stromgeschwindigkeiten davon auszugehen, dass bei den hohen Stromgeschwindigkeiten der Vergleichsbeispiele 6 bis 8 ein turbulenter Kühlgasstrom vorlag

**Patentansprüche**

**1.** Verfahren zum Herstellen von Endlosformkörpern (5) aus einer Formmasse, wie einer Spinnlösung enthaltend Wasser, Cellulose und tertiäres Aminoxid, wobei zunächst die Formmasse zu Endlosformkörpern extrudiert wird, dann die Endlosformkörper durch einen Luftspalt (6) geleitet und im Luftspalt verstreckt und einem Kühlgasstrom (15) aus einer Beblasungseinrichtung (14) ausgesetzt werden, und anschließend die Endlosformkörper durch ein Fällbad (9) geleitet werden, **dadurch gekennzeichnet, dass** der Kühlgasstrom (15) aus der Beblasungseinrichtung (14) in einem turbulenten Strömungszustand austritt.

**2.** Verfahren nach Anspruch 1, **dadurch gekennzeichnet, dass** der Kühlgasstrom (15) eine auf seiner Breite (B), gemessen im wesentlichen in Durchleitungsrichtung (7) der Endlosformkörper (5) durch den Luftspalt (6), und seiner Geschwindigkeit in Stromrichtung (15), und der Viskosität (v) des Kühlstrommediums basierenden Reynolds- Zahl (Re) von mindestens 2.500 aufweist.

**3.** Verfahren nach Anspruch 2, **dadurch gekennzeichnet, dass** die Reynolds-Zahl wenigstens 3.000 beträgt.

**4.** Verfahren nach einem der oben genannten Ansprüche, **dadurch gekennzeichnet, dass** die Geschwindigkeit des Kühlstromes (15) wenigstens 30 m/s beträgt.

**5.** Verfahren nach Anspruch 4, **dadurch gekennzeichnet, dass** die Geschwindigkeit des Kühlgasstromes (15) wenigstens 40 m/s beträgt.

**6.** Verfahren nach Anspruch 5, **dadurch gekennzeichnet, dass** die Geschwindigkeit des Kühlstromes (15) wenigstens 50 m/s beträgt.

**7.** Verfahren nach einem der oben genannten Ansprüche, **dadurch gekennzeichnet, dass** die Breite des Kühlstromes am Austritt höchstens 2 mm beträgt.

**8.** Verfahren nach Anspruch 7, **dadurch gekennzeichnet, dass** die Breite des Kühlgasstromes am Austritt höchstens 1 mm beträgt.

**9.** Verfahren nach einem der oben genannten Ansprüche, **dadurch gekennzeichnet, dass** die spezifische Blaskraft des Kühlgasstromes (15) wenigstens 5 mN/mm beträgt.

**10.** Verfahren nach Anspruch 9, d**adurch gekennzeichnet, dass** die spezifische Blaskraft des Kühlgasstromes (15) wenigstens 10 mN/mm beträgt.

**11.** Verfahren nach einem der oben genannten Ansprüche, **dadurch gekennzeichnet, dass** der Kühlgasstrom (15) im Bereich der ersten Reihe von Endlosfromkörpem (5), auf die er trifft, turbulent ist.

**12.** Verfahren nach einem der oben genannten Ansprüche, **dadurch gekennzeichnet, dass** der Luftspalt (6) einen ersten Abschirmungsbereich (20) aufweist, durch den der Kühlgasstrom (15) von den Extrusionsöffnungen getrennt ist.

**13.** Verfahren nach Anspruch 12, **dadurch gekennzeichnet, dass** neben dem ersten Abschirmungsbereich (20) einen zweiten Abschirmungsbereich (21) aufweist, durch den der Kühlbereich (19) von der Fällbadoberfläche (11) getrennt ist.

**14.** Verfahren nach Anspruch 1 oder 2, **dadurch gekennzeichnet, dass** ein den Extrusionsöffnungen (4) zugewandter Grenzbereich (18a) zwischen dem Kühlbereich (19) und dem ersten Abschirmungsbereich (20) im Wesentlichen parallel zu einer Ebene verläuft, in der im Mittel die Extrusionsöffnungen (4) liegen.

**15.** Verfahren nach einem der oben genannten Ansprüche, **dadurch gekennzeichnet, dass** die Extrusionsöffnungen (4) auf einer im Wesentlichen rechteckigen Grundfläche in Reihen quer zur Richtung (16) des Kühlgasstromes (15) angeordnet sind.

**16.** Verfahren nach Anspruch 4, **dadurch gekennzeichnet, dass** die Anzahl der Extrusionsöffnungen (4) in Reihenrichtung größer ist als in Kühlgasstromrichtung (16).

**17.** Verfahren nach einem der oben genannten Ansprüche, **dadurch gekennzeichnet, dass** im Fällbad (9) ein Umlenkorgan (10) vorgesehen ist, durch das im Betrieb die Endlosformkörper (5) als im Wesentlichen ebener Vorhang (8) zur Fällbadoberfläche (11) hin umgelenkt sind, und dass außerhalb des Fällbades eine Bündelungseinrichtung (14) vorgesehen ist, durch die im Betrieb die Endlosformkörper (5) zu einem Faserbündel (13) zusammengefasst sind.

**18.** Verfahren nach einem der oben genannten Ansprüche, **dadurch gekennzeichnet, dass** die Breite (D) des Kühlgasstromes (15) quer zur Durchleitungsrichtung (7) der Endlosformkörper (5) durch den Luftspalt (6) größer ist als die Höhe (B) des Kühlgasstromes in Durchleitungsrichtung.

**19.** Verfahren nach einem der oben genannten Ansprüche, **dadurch gekennzeichnet, dass** der Kühlgasstrom (15) aus einer Mehrzahl von Einzelkühlgasströmen zusammengesetzt ist.

**20.** Verfahren nach Anspruch 8, **dadurch gekennzeichnet, dass** die Einzelkühlgasströmen in Reihenrichtung nebeneinander angeordnet sind.

**21.** Verfahren nach einem der oben genannten Ansprüche, **dadurch gekennzeichnet, dass** der Kühlgasstrom im Bereich der Durchleitung der Endlosformkörper (5) durch den Luftspalt (6) als turbulenter Luftstrom ausgebildet ist.

**22.** Verfahren nach einem der oben genannten Ansprüche, **dadurch gekennzeichnet, dass** der Kühlgasstrom (15) eine in Durchleitungsrichtung (7) weisende Geschwindigkeitskomponente aufweist.

**23.** Verfahren nach einem der oben genannten Ansprüche, **dadurch gekennzeichnet, dass** die Formmasse vor ihrer Extrusion eine Nullscherviskosität von mindestens 10000 Pas, vorzugsweise mindestens 15000 Pas, bei 85°C aufweist.

**24.** Verfahren nach einem der oben genannten Ansprüche, **dadurch gekennzeichnet, dass** jeweils der Abstand des Kühlbereichs (19) von jeder Extrusionsöffnung (4) in Durchleitungsrichtung (7) wenigstens 2 mm beträgt.

**25.** Verfahren nach einem der oben genannten Ansprüche, **dadurch gekennzeichnet, dass** jeweils der Abstand I des Kühlbereichs (19) in Durchleitungsrichtung (7) von jeder Extrusionsöffnung (4) in Millimeter die folgende Ungleichung erfüllt:

$$I > H + A \cdot [\tan(\beta) - 0{,}14],$$

wobei H der Abstand der Kühlgasstromoberkante in Durchleitungsrichtung von der Ebene der Extrusionsöffnungen am Austritt aus der Beblasungseinrichtung (14) in Millimeter, A der Abstand quer zur Durchleitungsrichtung zwischen dem Austritt des Kühlgasstromes (15) der Beblasungseinrichtung (14) in Millimeter und der in Stromrichtung (16) letzten Reihe (22) der Endlosformkörper (5) in Millimeter und $\beta$ der Winkel in Grad zwischen der Kühlgasstromrichtung (16) und der Richtung quer zur Durchleitungsrichtung (7) ist.

**26.** Verfahren nach einem der oben genannten Ansprüche, **dadurch gekennzeichnet, dass** die Höhe L des Luftspaltes (6) in Durchleitungsrichtung (7) in Millimeter folgende Ungleichung erfüllt:

$$L > I + 0{,}28 \cdot A + B$$

wobei I den Abstand des Kühlbereichs (19) von den Extrusionsöffnungen (4) im Bereich der Durchleitung der Endlosformkörper (5) durch den Luftspalt (6), A der Abstand quer zur Durchleitungsrichtung (7) zwischen dem Austritt des Kühlgasstroms (15) aus der Beblasungseinrichtung (14) und der in Stromrichtung (16) letzten Reihe (22) der Endlosformkörper (5) in Millimeter und B die Höhe des Kühlgasstromes (15) quer zur Kühlgasstromrichtung (16) in Durchleitungsrichtung (7) am Austritt des Kühlgasstromes (15) aus der Beblasungseinrichtung (14) ist.

**Claims**

1. A method for producing continuously molded bodies (5) from a molding material, such as a spinning solution containing water, cellulose and tertiary amine oxide, the molding material being first extruded to obtain continuously molded bodies, the continuously molded bodies being then passed through an air gap (6) and stretched in said air gap and exposed to a cooling gas stream (15) from a blowing means (14), and the continuously molded bodies being then guided through a precipitation bath (9), **characterized in that** the cooling gas stream (15) exits from the blowing means (14) in a turbulent flow state.

2. The method according to claim 1, **characterized in that** the cooling gas stream (15) has a Reynolds number (Re) of at least 2,500, based on its width (B), measured substantially in the direction of passage (7) of the continuously molded bodies (5) through the air gap (5), and on its velocity in the direction of flow (15), and the viscosity (v) of the cooling flow medium.

3. The method according to claim 2, **characterized in that** the Reynolds number is at least 3,000.

4. The method according to any one of the aforementioned claims, **characterized in that** the velocity of the cooling stream (15) is at least 30 m/s.

5. The method according to claim 4, **characterized in that** the velocity of the cooling gas stream (15) is at least 40 m/s.

6. The method according to claim 5, **characterized in that** the velocity of the cooling stream (15) is at least 50 m/s.

7. The method according to any one of the aforementioned claims, **characterized in that** the width of the cooling stream at the exit is not more than 2 mm.

8. The method according to claim 7, **characterized in that** the width of the cooling gas stream at the exit is not more than 1 mm.

9. The method according to any one of the aforementioned claims, **characterized in that** the specific blowing force of the cooling gas stream (15) is at least 5 mN/mm.

10. The method according to claim 9, **characterized in that** the specific blowing force of the cooling gas stream (15) is at least 10 mN/mm.

11. The method according to any one of the aforementioned claims, **characterized in that** the cooling gas stream (15) is turbulent in the area of the first row of continuously molded bodies (5) on which it impinges.

12. The method according to any one of the aforementioned claims, **characterized in that** the air gap (6) comprises a first shielding area (20) by which the cooling gas stream (15) is separated from the extrusion orifices.

13. The method according to claim 12, **characterized in that** apart from the first shielding area (20) it comprises a second shielding area (21) through which the cooling area (19) is separated from the precipitation bath surface (11).

14. The method according to claim 1 or 2, **characterized in that** the boundary area (18a) facing the extrusion orifices (4) and located between the cooling area (19) and the first shielding area (20) extends substantially in parallel with a plane in which the extrusion orifices (4) are positioned on average.

15. The method according to any one of the aforementioned claims, **characterized in that** the extrusion orifices (4) are arranged on a substantially rectangular base in rows in a direction transverse to the direction (16) of the cooling gas stream (15).

16. The method according to claim 4, **characterized in that** the number of the extrusion orifices (4) in row direction is greater than in the cooling gas stream direction (16).

17. The method according to any one of the aforementioned claims, **characterized in that** the precipitation bath (9) has disposed therein a deflector (10) by which during operation the continuously molded bodies (5) are deflected as a substantially planar curtain (8) to the precipitation bath surface (11), and that outside of the precipitation bath there is provided a bundling means (14) by which during operation the continuously molded bodies (5) are united to form a fiber bundle (13).

18. The method according to any one of the aforementioned claims, **characterized in that** the width (D) of the cooling gas stream (15) in a direction transverse to the direction of passage (7) of the continuously molded bodies (5) through the air gap (6) is larger than the height (B) of the cooling gas stream in the direction of passage.

19. The method according to any one of the aforementioned claims, **characterized in that** the cooling gas stream (15) is composed of a plurality of individual cooling gas streams.

20. The method according to claim 8, **characterized in that** the individual cooling gas streams are arranged side by side in row direction.

21. The method according to any one of the aforementioned claims, **characterized in that** the cooling gas stream is designed as a turbulent air flow in the area where the continuously molded bodies (5) are passed through the air gap (6).

22. The method according to any one of the aforementioned claims, **characterized in that** the cooling gas stream (15) has a velocity component oriented into the direction of passage (7).

23. The method according to any one of the aforementioned claims, **characterized in that** the molding material prior to its extrusion has a zero shear viscosity of at least 10000 Pas, preferably at least 15000 Pas, at 85°C.

24. The method according to any one of the aforementioned claims, **characterized in that** the distance of the cooling area (19) from each extrusion orifice (4) in the direction of passage (7) is at least 2 mm each time.

25. The method according to any one of the aforementioned claims, **characterized in that** the distance I of the cooling area (1) in the direction of passage (7) from each extrusion orifice (4) in millimeters satisfies the following inequality:

$$I > H + A \bullet [\tan (\beta) - 0.14]$$

where H is the distance of the upper edge of the cooling gas stream in the direction of passage from the plane of the extrusion orifices at the exit from the blowing means (14) in millimeters, A is the distance in a direction transverse to the direction of passage between the exit of the cooling gas stream (15) of the blowing means (14) in millimeters and the row (22) of the continuously molded bodies (5) that is the last one in flow direction (16), in millimeters, and $\beta$ is the angle in degrees between the cooling gas stream direction (16) and the direction transverse to the direction of passage (7).

26. The method according to any one of the aforementioned claims, **characterized in that** the height L of the air gap (6) in the direction of passage (7) in millimeters satisfies the following inequality:

$$L > I + 0.28 \bullet A + B$$

where I is the distance of the cooling area (19) from the extrusion orifices (4) in the area where the continuously molded bodies (5) are passed through the air gap (6), A is the distance in a direction transverse to the direction of passage (7) between the exit of the cooling gas stream (15) from the blowing means (14) and the row (22) of the continuously molded bodies (5) that is the last one in flow direction (16), in millimeters, and B is the height of the cooling gas stream (15) in a direction transverse to the cooling gas stream direction (16) in the direction of passage (7) at the exit of the cooling gas stream (15) from the blowing means (14).

**Revendications**

1. Procédé pour produire des corps à forme sans fin (5) à partir d'une matière moulable, comme une solution de filature contenant de l'eau, de la cellulose et un amino-oxyde tertiaire, dans lequel la matière moulable est tout d'abord extrudée pour donner des corps à forme sans fin, les corps à forme sans fin sont amenés à passer à travers une fente d'air (6) et étirés dans la fente d'air, et exposés à un courant de gaz de refroidissement (15) provenant d'un dispositif de soufflage (14), et les corps à forme sans fin sont ensuite menés à travers un bain de régeneration (9), **caractérisé en ce que** le courant de gaz de refroidissement (15) sort du dispositif de soufflage (14) dans un état d'écoulement turbulent.

2. Procédé selon la revendication 1, **caractérisé en ce que** le courant de gaz de refroidissement (15) présente un nombre de Reynolds (Re), basé sur sa largeur (B), mesurée essentiellement dans la direction de passage (7) des corps en forme sans fin (5) à travers la fente d'air (6), sur sa vitesse en direction d'écoulement (15) et sur la viscosité (v) du milieu de refroidissement, égal à au moins 2500.

3. Procédé selon la revendication 2, **caractérisé en ce que** le nombre de Reynolds s'élève à au moins 3000.

4. Procédé selon l'une des revendications précédentes, **caractérisé en ce que** la vitesse du courant de gaz de refroidissement (15) s'élève à au moins 30 m/s.

5. Procédé selon la revendication 4, **caractérisé en ce que** la vitesse du courant de gaz de refroidissement (15) s'élève à au moins 40 m/s.

6. Procédé selon la revendication 5, **caractérisé en ce que** la vitesse du courant de gaz de refroidissement (15) s'élève à au moins 50 m/s.

7. Procédé selon l'une des revendications précédentes, **caractérisé en ce que** la largeur du courant gaz de refroidissement à la sortie s'élève tout au plus à 2 mm.

8. Procédé selon la revendication 7, **caractérisé en ce que** la largeur du courant de gaz de refroidissement à la sortie s'élève au plus à 1 mm.

9. Procédé selon l'une des revendications précédentes, **caractérisé en ce que** la force de soufflage spécifique du courant de gaz de refroidissement (15) s'élève à au moins 5 mN/mm.

10. Procédé selon la revendication 9, **caractérisé en ce que** la force de soufflage spécifique du courant de gaz de refroidissement (15) s'élève à au moins 10 mN/mm.

11. Procédé selon l'une des revendications précédentes, **caractérisé en ce que** le courant de gaz de refroidissement (15) est turbulent dans la zone de la première rangée de corps à forme sans fin (5) qu'il atteint.

12. Procédé selon l'une des revendications précédentes, **caractérisé en ce que** la fente d'air (6) comprend une première zone protégée (20) au moyen de laquelle le courant de gaz de refroidissement (15) est séparé vis-à-vis des ouvertures d'extrusion.

13. Procédé selon la revendication 12, **caractérisé en ce que** la fente d'air comprend, outre la première zone protégée (20), une seconde zone protégée (21) au moyen de laquelle la zone de refroidissement (19) est séparée vis-à-vis de la surface (11) du bain de régeneration.

14. Procédé selon la revendication 1 ou 2, **caractérisé en ce que** une zone limite (18a) tournée vers les ouvertures d'extrusion (4) entre la zone de refroidissement (19) et la première zone protégée (20) s'étend essentiellement parallèlement à un plan dans lequel sont situées en moyenne les ouvertures d'extrusion (4).

15. Procédé selon l'une des revendications précédentes, **caractérisé en ce que** les ouvertures d'extrusion (4) sont agencées, sur une surface de base essentiellement rectangulaire, en rangées transversalement à la direction (16) du courant de gaz de refroidissement (15).

16. Procédé selon la revendication 4, **caractérisé en ce que** le nombre des ouvertures d'extrusion (4) en direction des rangées est supérieur à celui en direction du courant de gaz de refroidissement (16).

17. Procédé selon l'une des revendications précédentes, **caractérisé en ce qu'**il est prévu un organe de déviation (10) dans le bain de régeneration (9), au moyen duquel les corps à forme sans fin (5) sont déviés en fonctionnement pour devenir un rideau (8) essentiellement plan en direction de la surface du bain de régeneration (11), et **en ce qu'**il est prévu à l'extérieur du bain de régeneration un dispositif de mise en faisceau (14) au moyen duquel les corps à forme sans fin (5) sont regroupés en fonctionnement pour former un faisceau de fibres (13).

18. Procédé selon l'une des revendications précédentes, **caractérisé en ce que** la largeur (D) du courant de gaz de refroidissement (15) perpendiculairement à la direction de passage (7) des corps à forme sans fin (5) à travers la fente d'air (6) est supérieur à la hauteur (B) du courant de gaz de refroidissement dans la direction de passage.

19. Procédé selon l'une des revendications précédentes, **caractérisé en ce que** le courant de gaz de refroidissement (15) est composé d'une pluralité de courants individuels de gaz de refroidissement.

20. Procédé selon la revendication 8, **caractérisé en ce que** les courants individuels de gaz de refroidissement sont agencés les uns à côté des autres dans la direction des rangées.

21. Procédé selon l'une des revendications précédentes, **caractérisé en ce que** le courant de gaz de refroidissement est réalisé sous forme d'un courant d'air turbulent dans la zone de passage des corps à forme sans fin (5) à travers la fente d'air (6).

22. Procédé selon l'une des revendications précédentes, **caractérisé en ce que** le courant de gaz de refroidissement (15) présente une composante de vitesse dirigée dans la direction de passage (7).

23. Procédé selon l'une des revendications précédentes, **caractérisé en ce que** la masse de mise en forme présente, avant son extrusion, une viscosité à cisaillement zéro d'au moins 10 000 Pas, de préférence d'au moins 15 000 Pas, à 85° Celsius.

24. Procédé selon l'une des revendications précédentes, **caractérisé en ce que** la distance respective de la zone de refroidissement (19) vis-à-vis de chaque ouverture d'extrusion (4) dans la direction de passage (7) s'élève à au moins 2 mm.

25. Procédé selon l'une des revendications précédentes, **caractérisé en ce que** la distance I de la zone de refroidissement (19) dans la direction de passage (7) vis-à-vis de chaque ouverture d'extrusion (4) en millimètre satisfait l'inéquation suivante :

$$I > H + A \cdot [\tan(\beta) - 0{,}14]$$

dans laquelle H est la distance de l'arête supérieure du courant de gaz de refroidissement dans la direction de passage vis-à-vis du plan des ouvertures d'extrusion à la sortie du dispositif de soufflage (14) en millimètres, A est la distance transversalement à la direction de passage entre la sortie du courant de gaz de refroidissement (15) du dispositif de soufflage (14) et la dernière rangée (22), en direction d'écoulement (16), des corps à forme sans fin (5) en millimètres, et β est l'angle en degrés entre la direction d'écoulement du gaz de refroidissement (16) et la direction transversalement à la direction de passage (7).

26. Procédé selon l'une des revendications précédentes, **caractérisé en ce que** la hauteur L de la fente d'air (6) dans la direction de passage (7) en millimètres satisfait l'inéquation suivante :

$$L > I + 0{,}28 \cdot A + B$$

dans laquelle I est la distance de la zone de refroidissement (19) vis-à-vis des ouvertures d'extrusion (4) dans la région du passage des corps à forme sans fin (5) à travers la fente d'air (6), A est la distance transversalement à la direction de passage (7) entre la sortie du courant de gaz de refroidissement (15) hors du dispositif de soufflage (14) et la dernière rangée (22), dans la direction d'écoulement (16), des corps à forme sans fin (6) en millimètres, et B est la hauteur du courant de gaz de refroidissement (15) transversalement à la direction du courant de gaz de refroidissement (16) en direction de passage (7) à la sortie du courant de gaz de refroidissement (15) hors du dispositif de soufflage (14).

FIG.1

FIG.2

FIG.3

FIG.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4246221 A
- US 4261943 A
- US 4416698 A
- WO 9319230 A
- WO 9819230 A
- WO 9501470 A
- WO 9504173 A
- WO 9428218 A
- WO 9818983 A
- WO 9617118 A
- WO 0168958 A
- WO 0006813 A